Europäisches Patentamt

(19) European Patent Office    (11) Numéro de publication: **0 036 373**

Office européen des brevets                                         **B2**

(12) **NOUVEAU FASCICULE DE BREVET EUROPEEN**

(45) Date de publication du nouveau fascicule du brevet: **16.01.91**    (51) Int. Cl.⁵: **C 03 C 3/32**

(21) Numéro de dépôt: **81400409.9**

(22) Date de dépôt: **17.03.81**

(54) Nouveaux verres fluorés.

(30) Priorité: **18.03.80 FR 8006088**

(43) Date de publication de la demande:
**23.09.81 Bulletin 81/38**

(45) Mention de la délivrance du brevet:
**04.02.87 Bulletin 87/06**

(45) Mention de la decision concernant l'opposition:
**16.01.91 Bulletin 91/03**

(84) Etats contractants désignés:
**DE GB IT NL**

(56) Documents cités:
**EP-A-0 017 566    US-A-2 466 509
FR-A-2 077 731    US-A-2 511 224
FR-A-2 384 724    US-A-2 819 977
CHEMICAL ABSTRACTS, vol. 90, 1979 page 569,
abrégé 72565w Columbus, Ohio, US J.J.
VIDEAU et al.: "Elaboration and optical
properties of new neodymium-activated
fluoride glasses"**
Le dossier contient des informations techniques
présentées postérieurement au dépôt de la
demande et ne figurant pas dans le présent
fascicule.

(73) Titulaire: **Le verre fluoré S.A.
Z.I. du Champ Martin Vern-sur-Seiche
F-35230 St Erblon (FR)**

(72) Inventeur: **Poulain, Marcel J.
33, boulevard Charles Péguy
F-35000 Rennes (FR)**
Inventeur: **Poulain, Michel A.
Lotissement de la Janaie
F-35530 Servon-sur-Vilaine (FR)**
Inventeur: **Maze, Gwenael
1, rue de Brilhac
F-35000 Rennes (FR)**

(74) Mandataire: **Le Guen, Louis François
CABINET Louis LE GUEN 38, rue Levavasseur
B.P. 91
F-35802 Dinard Cédex (FR)**

(56) Documents cités:
**CHEMICAL ABSTRACTS, vol. 92, 16 avril 1980,
page 312, abrégé 133788j Columbus, Ohio, US
J.P. MIRANDAY et al.: "New glasses formed by
transition-element fluorides"**

**CHEMICAL ABSTRACTS, vol. 91, 22 novembre
1979, page 297, abrégé 180056h Columbus,
Ohio, US A. LECOQ et al.: "Lanthanum
fluorozirconate glasses"**

# EP 0 036 373 B2

56 Documents cités:

JOURNAL OF THE AMERICAN CERAMIC SOCIETY, vol. 53, no. 1, 21-01-1970 V.P. DORONINA et al.: "Optical properties of fluoroberyllium glasses activated by terbium" Chemical Abstracts Vol. 90, 1979, page 307, 113079

Angewandte Chemie, Vol. 76, No. 8, 21 avril 1964, page 345

Journal of Non-Crystalline Solids, 43 (1981) pages 309-344 "Halide Glasses" C.M. Baldwin, R.M. Almeida; J.D. Mackenzie
"Le Verre-Nature, structure et propriétés" H. Scholze, 1980, pages 122-125

"Glass: Science and Technology-Vol. 1, Glass-Forming Systems" D.R. Uhlmann et N.J. Kreidl, 1983, pages 228-231

Mat. Res. Bull., Vol. 13, 1978, pp. 1013-46
J. Amer. Ceram. Soc., Vol. 62 (9-10), 1979, pp. 537-38

**Description**

La présente invention concerne de nouveaux verres fluorés qui peuvent être utilisés dans le domaine de l'optique, du génie chimique et de l'électronique. Par verres fluorés, on entend des verres dans la composition desquels le rôle vitrificateur n'est pas joué par des oxydes classiques.

L'existence de verres entièrement fluorés est demeurée pendant longtemps un phénomène isolé à l'impact industriel limité. Les premiers travaux notables ont porté sur des combinaisons à base de fluorure de béryllium $BeF_2$, en tirant parti de l'analogie chimique et structurale de ce domposé avec la silice $SiO_2$. Ces travaux, menés pour l'essentiel par KUAN-HAN SUN, ont donné lieu à plusieurs brevets et publications scientifiques dont on trouvera l'essentiel dans l'article de WALTER JAHN "Mehrstoffsysteme zum Aufbau optischer Gläser, Teil III: Neue optische Gläser auf Fluoridbasis" paru dans Glastechnische Berichte, mars 1961, pp. 107—120. A titre d'exemple de cex travaux, on peut également citer le brevet US—A—2 511 224.

Ces brevets pris pour la plupart dans les années 1940—1950, appartiement maintenant au domaine public. Le coût du fluorure de béryllium, sa toxicité, la sensibilité à l'humidité des verres obtenus constituèrent autant d'entraves à leur développement.

La recherche sur les matériaux vitreux entièrement fluorés a reçu une nouvelle impulsion avec la découverte des verres au tétrafluorure de zirconium par M. POULAIN, M. POULAIN et J. LUCAS. Les compositions et les méthodes de préparation ont fait l'objet des brevets FR—A—2 354 977 et FR—A—2 384 724.

Une singularité de cette découverte réside dans le fait que ces verres n'appartenaient à aucun type de verre connu antérieurement et s'en distinguent tant par la structure que la chimie. L'ensemble des propriétés de ces matériaux découle logiquement de leur composition et de leur structure. Ces résultats sont consignés dans l'article de M. POULAIN et J. LUCAS "Une nouvelle classe de matériaux: les verres fluorés au tétrafluorure de zirconium" paru dans la revue Verres et Réfractaires, volume 32; n° 4, 1978, pp. 505—513.

Dans l'article intitulé "Lanthaum Fluorozirconate Glasses" par A. Lecoq et M. Poulain et paru dans la revue "Journal of non-crystalline solids", Vol. 34, n° 1, August/September 1979; pp. 101—110, des compositions quaternaires de verres de $ZrF_4$, dans lesquelles la proportion en moles de $ZrF_4$ était toujours supérieure à 50% ont également été étudiées. Dans ces verres, le rôle du tétrafluorure de zirconium est prépondérant.

La question était alors posée de savoir si l'existence de verres fluorés était liée au caractère chimique particulier du zirconium et du hafnium, ou si elle procédait d'un mécanisme beaucoup plus général de stabilisation de fluorures complexes à l'état amorphe. Dans le premier cas, les perspectives de développement de ces verres se trouvaient limitées par les caractéristiques du zirconium en milieu fluoré, notamment en ce qui concerne les températures de ramollissement, de fusion et de décomposition, la tenue aux solutions aqueuses et le transparence infrarouge. Au contraire, l'existence éventuelle de verres fluorés ne contenant ni zirconium ni hafnium rendait concevable la synthèse de verres utilisables dans un domaine thermique plus élevé, chimiquement plus inertes et présentant un domaine de transparence plus étendu.

Un premier élément de réponse à cette question fondamentale peut être entrevu dans le brevet américain N° 2 446 509 du 5 avril 1949, déposé par KUAN-HAN SUN, déjà cité, relatif à des verres fluorés issus de la combinaison des fluorures $PbF_2$, $AlF_3$, $MgF_2$, $SrF_2$. Les résultats obtenus tout récemment par J. P. MIRANDAY, C. JACOBONI et R. DE PAPE, permettent de tracher définitivement sn faveur de la seconde hypothèse. Ces travaux exposés das l'article "Nouveaux verres formés par les fluorures d'éléments de transition" dans la Revue de Chimie Minérale, t.6, 1979, pp. 277—282, et qui sont concrétisés dans le documents EP—A—0 017 566 montrent que des verres fluorés peuvent être préparés à partir de combinaisons ternaires de fluorures de métaux de transition ($CrF_3$, $FeF_3$, $MnF_2$, $CuF_2$, $ZnF_2$, $GaF_3$) et de fluorures alcalins, alcalino-terreux, fluorure de plomb, avec incorporation éventuelle de fluorures de terres rares.

On peut encore citer parmi les verres fluorés connus, ceux qui sont définis dans l'ouvrage "Chemical Abstracts", vol. 90, 1979, page 569, abrégé 212565 w, qui concerne un système quaternaire $BaF_2$—$CaF_2$—$AlF_3$—$BeF_2$.

Il est dès lors manifeste que l'existence de verres entièrement fluorés est un phénomène beaucoup plus général que l'examen des premières compositions pouvait le laisser prévoir. On est donc conduit à s'interroger sur les conditions qui président à la formation de tels verres. Les théories classiques de l'état vitreux, fondées sur l'existence d'un réseau vitrificateur résultat de l'association apériodique de tétraèdres ou autres petits polyèdres, sont ici inadaptées. En premier lieu, elles supposent un caractère covalent marqué des liaisons anion-cation, ce qui est en contradiction avec la très forte ionicité des mileux fluorés. En second lieu, elles imposent une distinction entre formateurs et modificateurs de réseau qui, dans le cas des verres fluorés, ne repose sur aucun critère géométrique acceptable: ainsi le zirconium, considéré comme formateur, et le sodium, considéré comme modificateur, peuvent très bien se trouver au centre de polyèdres semblables. Qui plus est, le concept même de réseau vitreux, qui a une assise expérimentale das le cas de la silice, en est totalement dépourvu dans le cas des verres fluorés.

Les travaux contemporains, menés sur les phases cristallisées désordonnées, permettent une approche théorique plus cohérente du problème. Les études relatives à des phases non stoechiométriques

# EP 0 036 373 B2

dérivées de la structure de la fluorine ont conduit BEVAN è élaborer le concept de verres d'aions: la répartition spatiale des anions, le plus souvent des ions F-, ressemble davantage à celle d'un liquide qu'à celle d'un cristal; l'élément d'ordre prédominant est la distribution régulière des cations qui fait apparaître une pseudo symétrie cubique au niveau du spectre de diffraction de rayons X ou de neutrons. On trouvera l'essentiel de cette analyse das l'article "Fluorine deficient tysonite type solid solutions and related phases" dans la Revue Chimie Minérale, t.15, 1978, pp. 346—359.

Une observation analogue a été faite par B. C. TOFFIELD, M. POULAIN et J. LUCAS, au cours de leur étude des phases fluorées non stoechiométriques dérivées de la structure $ReO_3$, ainsi que cela ressort de l'article "The structure of $Zr_{0.8} Yb_{0.2} Fb_{3.2} O_{0.3}$ ($MX_{3.5}$) by powder neutron diffraction" dans le Journal of Solid State Chemistry 27 12979, pp 163—178. Là encore, un désordre statistique se manifeste au niveau des anions, alors qu'une contrainte d'ordre est apportée par la distribution cubique des cations.

Ces deux séries de travaux menés indépendamment suggèrent qu'il suffit de supprimer l'élément d'ordre apporté par les cations pour passer d'un état de "verre d'aions" à celui de verre. Dans cette optique, le modèle commun à tous les verres fluorés sera celui d'une distribution homogène et apériodique d'aions F- constituant un ensemble globalement assez compact. La cohésion de cet ensemble qui tend naturellement à éclater du fait de la répulsion électrostatique est assurée par l'insertion de cations en son sein. L'obtention d'une phase vitreuse étant subordonnée à l'absence d'ordre entre les cations, il importe que ceux-ci puissent se distribuer de façon aléatoire du réseau aionique. Ceci implique, d'une part, que chaque cation dispose de plusieurs possibilités différentes de localisation et, d'autre part, que les interactions entre cations soient faibles.

La première de ces conditions peut être réalisée losqu'on fait intervenir en proportion majeure des ions fortement chargés. En effet, le nombre de site d'accueil est proportionnel au nombre de cations $M^{n+}$ dont chacun introduit $n$ ions fluor. Dans le cas limite d'un empilement aionique compact et d'un cation en site octaédrique, il lui correspond $n$ sites octaédriques, soit $n$ possibilités d'insertion différentes. Par ailleurs, l'énergie d'interaction électrostatique dépendat directement de la charge des ions, il est clair qu'un ion apportera une énergie de stabilisation d'autant plus élevée que sa charge sera plus forte et la distance anion-cation plus faible. On est ainsi amené à considérer le rapport

$$\frac{n}{Ri},$$

de la charge de l'ion sur son rayon ionique. Suivant leur taille, les différents cations peuvent occuper, en milieu fluoré, des sites tétraédriques, octaédriques, prismatiques ou à géométrie plus complexe (coordinance de 7 à 10). Ce facteur géométrique a une incidence directe sur la possibilité d'obtention de phases vitreuses désordonnées: das les empilements réels, il existe beaucoup plus de sites petits que de sites de grandes dimensions. Ainsi, un empilement compact contient deux fois plus de sites tétraédriques que de sites octaédriques, ce qui augmente les possibilités de placement différentes. En revanche, les liaisons anion-cation sont plus courtes et, de ce fait, les distances intercationiques le sont également. On constate expérimentalement que de trop fortes répulsions électrostatiques entre cations induisent une compétivité entre une structure tridimensionnel — donc solide — et une structure moléculaire — donc liquide ou gazeuse. Ce phénomène est d'autant plus marqué que le rapport de la charge sur le rayon ionique

$$\frac{n}{Ri}$$

du cation $M^{n+}$ est plus grand. En pratique, les éléments dont les fluorures simples sont volatils sont inaptes à la formation de verres, sauf peut être à basse température. C'est le cas du bore, du carbone et du silicium dont les fluorures sont gazeux à la température ambiante.

Le rôle de vitrificateur peut être assuré par un seul cation. Il est souvent plus intéressant qu'il le soit par plusieurs cations, pour des raisons énergétiques et géométriques. L'énergie de répulsion entre cations étant proportionnelle au facteur

$$\frac{n_1 n_2}{r_{12}}$$

($n_1$ et $n_2$ étant les charges de chaque cation et $r_{12}$ la distance qui les sépare), il en résulte que l'introduction d'ions de charge $n_2$ inférieure à $n_1$ ou de rayon ionique $R_2$ supérieure à $R_1$, aura pour conséquence de diminuer cette énergie de répulsion. D'autre part, l'empilement anionique créant un nombre variable de sites de petite dimension (tétraèdes, octaèdres) et de sites plus volumineux (dodécaèdres, antiprismes carrés) on obtient un bilan énergétique plus favorable s'il n'y a pas d'écarts trop importants entre le taux de remplissage des uns et des autres. Un exemple classique est celui de l'introduction de fluorure d'aluminium ou de magnésium dans les verres de fluoroberyllates, les ions $Al^{+++}$ et $Mg^{++}$ viennent occuper quelques uns des sites octaédriques vacants.

On définit comme vitrifacteur les cations susceptibles de stabiliser énergiquement la distribution anionique. Ce concept est différent de celui de "formateur de réseau" utilisé habituellement et qui implique l'existence d'un réseau résultant de l'association apériodique de polyèdres de géométrie constante.

4

La formation d'un verre implique, d'une part, la stabilité thermodynamique de l'ensemble ionique et, d'autre part, l'absence d'ordre à longue distance. De ce fait, l'empilement anionique ne doit pas être compact; sans quoi l'apparition d'un ordre à long terme serait inévitable. La nécessité de constituer un ensemble anionique non compact impose la création de sites qui ne sont ni tétraédriques, ni octaédriques dans les zones où se manifeste une certaine dislocation de l'édifice anionique. Du fait des répulsions électrostatiques, ces zones correspondent souvent à des états énergétiques instables qui favorisent une réorganisation plus structurée, et ainsi se comportent comme des germes de recristallisation. Cet effet néfaste pour l'obtention d'un verre peut être compensé par l'introduction de cations susceptibles de venir se placer dans de telles zones. Cette fonction peut typiquement être celle des ions alcalins, alcalinoterreux ou equivalents ($Pb^{2+}$, $Eu^{2+}$, $Bi^{3+}$, $Tl^+$, etc.). Le terme de modifieur, généralement appliquè à ces ions, peut être ici conservé, mais dans une acceptation bien précise: ils modifient la périodicité et la compacité de la distribution anionique. On doit remarquer que cette fonction de modifieur est directement liée à la taille de l'ion puisqu'elle implique que celui-ci occupe un site différent de ceux qui existent dans les empilements compacts — c'est à dire tétraédriques et octaédriques —. De ce fait, il est parfaitement concevable qu'un même anion assure les deux fonctions de vitrificateur et de modifieur, telles que l'on vient de les définir. Il lui suffit de présenter à la fois une charge et un rayon ionique élevé, par exemple $Ri \geqslant 0,8$ et $n \geqslant 3$. C'est le cas du thorium, de l'uranium IV et des terres rares. Par ailleurs, l'utilisation de cations peu chargés comme modifieurs présente l'avantage de mettre en jeu des forces de répulsion électrostatiques relativement faibles entre cations voisins.

Certaines caractéristiques physiques du verre dépendent directement de la composition. Ainsi la température de transition vitreuse et la température de fusion se trouvent abaissées par la présence d'ions volumineux et peu chargés tels que les alcalins et alcalinoterreux. De façon générale, il est possible d'établir des corrélations entre telle ou telle grandeur physique et la concentration des diversions. L'indice de réfraction peut ainsi être évalué à priori avec une assez bonne approximation.

Au terme de cette analyse basée sur la stabilisation énergétique d'un empilement d'ions F- conduisant à une structure vitreuse, nous pouvons énoncer quelques règles simples relatives aux cations:

1) les cations vitrificateurs doivent présenter un rapport de la charge de l'ion à son rayon $\underline{n}$ élevé.

2) la distribution anionique doit offrir beaucoup plus de sites d'accueil qu'il y a de cations vitrificateurs à insérer.

3) un effet de stabilisation supplémentaire est obtenu par l'introduction de cations de rayon ionique élevé ($Ri \geqslant 0,8$) dont le rôle est d'inhiber la formation d'un empilement anionique compact.

Les verres fluorés actuellement connus obéissent tous à ces règles, qu'il s'agisse des verres aux fluorobéryllates, aux fluorozirconates, aux fluorures de métaux de transition ($VF_3$, $CrF_3$, $FeF_3$) ou au floruré de gallium, $GaF_3$. La règle N° 3 n'est évidemment pas réalisée dans le cas de $BeF_2$ vitreux, mais il est clair qu'elle est vérifiée dans la pratique par la qualité des verres de fluorobéryllates sur $BeF_2$ vitreux.

Cette nouvelle approche de l'état vitreux suggère la possibilité de synthétiser bien d'autres verres fluorés. Le lLithium $Li^+$ est un vitrificateur possible du fait de son aptitude è occuper des sites tétraédriques ou octaédriques et, si son rapport

$$\frac{n}{Ri}$$

n'est pas très élevé, il n' induit que de faibles répulsions inter-cationiques. De nombreux ions trivalents sont aptes à vitrifier, en particulier les terres rares, l'indium, l'yttrium, lorsque ces éléments sont couplés à des cations octaédriques (Mg, Al, ions de transition 3d). La plupart des ions tétravalents sont des vitrificateurs potentiels. En dehors de $Zr^{4+}$ deja connu, on peut citer $Ti^{4+}$, $Ce^{4+}$, $Pb^{4+}$, $Sn^{4+}$, $Th^{4+}$, $U^{4+}$.

L'objet de la présente invention a été de mettre en évidence l'aptitude de ces divers cations à former des phases vitreuses lorsqu'ils sont utilisés seuls ou associés, en proportion majeure, à des éléments modifieurs au sens qui a été défini plus haut. La quantité d'éléments modifieurs convenable dépend du système chimique constitué par les vitrificateurs: dans certains cas elle peut être nulle, par exemple lorsque la fonction de modifieur, telle qu'on l'a définie, est assurée par un élément vitrificateur; dans d'autres cas, elle peut dépasser 50% en moles.

Les verres fluorés selon l'invention dont les anions sont uniquement des anions F, sont caractérisés en ce que les cations vitrificateurs stabilisant la distribution homogène et apériodique des anions F- sont une ou plusieurs espèces cationiques appartenant au groupe $Li^+$, $Sc^{3+}$, $Y^{3+}$, toutes les terres rares trivalentes, $In^{3+}$, $Th^{4+}$, $U^{4+}$, $Nb^{4+}$, $Ti^{4+}$, $Ce^{4+}$, $Pb^{4+}$, $Sn^{4+}$, en association avec des modifieurs appartenant au groupe $Na^+$, $K^+$, $Rb^+$, $Cs^+$, $Tl^+$, $Ca^{2+}$, $Eu^{2+}$, $Sr^{2+}$, $Ba^{2+}$, $Pb^{2+}$, $Bi^{3+}$, lesdits verres étant exempts de béryllium, d'aluminium, de métaux de transition 3d (V, Cr, Mn, Fe, Co, Ni, Cu, Zn), de gallium, de zirconium et d'hafnium.

Ces verres fluorés peuvent contenir du $ZrF_4$ ou du $HfF_4$ pour renforcer le rôle vitrificateur desdites espèces cationiques, mais cependant dans une portion n'excédant pas 35% en mole.

Selon une seconde variante, les verres fluorés selon l'invention, dont les anions sont uniquement des anions F-, sont caractérisés en ce que les cations vitrifications stabilisant la distribution homogène et apériodique des anions F- sont une ou plusieurs espèces appartenant au groups $Sc^{3+}$, toutes les terres rares trivalentes, l'yttrium excepté, $In^{3+}$, $Th^{4+}$, $U^{4+}$, $Nb^{4+}$, $Ti^{4+}$, $Ce^{4+}$, $Pb^{4+}$, $Sn^{4+}$, en association avec des cations octaédriques appartenent au groupe $Al^{3+}$, $Mg^{2+}$, $M_1^{2+}$, avec $M_1$ = Cr, Mn, Fe, Co, Ni, Cu, Zn, $M_2^{3+}$,

avec $M_2$ = Cr, V, Fe, la concentration en $M_1$ et $M_2$ pouvant atteindre 1,5 fois la concentration desdites espèces cationiques et 3 fois ladite concentration dans le cas de l'aluminium et du magnésium, lesdits verres étant exempts de béryllium, de zirconium et d'hafnium.

Selon une troisièmme variante de l'invention, les verres fluorés dont les anions sont uniquement des anions F- et dans lesquels l'un des cations vitrificateurs stabilisant la distribution homogène et apériodique des anions F- est $Y^{3+}$, sont caractérisés en ce qu'ils contiennent encore, d'une part, un ou plusieurs cations du groupe $Li^+$, $Sc^{3+}$, les terres rares trivalentes, $In^{3+}$, $Th^{4+}$, $U^{4+}$, $Nb^{4+}$, $Ti^{4+}$, $Ce^{4+}$, $Pb^{4+}$, $Sn^{4+}$ et, d'autre part, des cations octaédiques $Al^{3+}$, lesdits verres étant exempts de béryllium.

Dans une dernière variante de l'invention, les verres fluores dont les anions sont uniquement des anion F- et dans lesquels l'un des cations vitrificateurs stabilisant la distribution homogène et apériodique des anions F- est $Y^{3+}$, sont caractérisé en ce qu'ils contiennent encore les cations octaédriques $Al^{3+}$ et $Mg^{2+}$ en combinaison, lesdits verres êtant exempts de béryllium.

Dans les verres objets de la présente invention, les éléments modifieurs sont les fluorures d'ions alcalins, alcalinoterreux ou équivalents, tels que rassemblés dans le tableau ci-dessous. On prend comme vitrificateur un ou plusieurs des fluorures d'ions non exclusivement octaédriques figurant au même tableau. Ces fluorures peuvent être utilisés seuls ou en association avec des fluorures de cations octaédriques, comme $AlF_3$, $MgF_2$, $MF_2$ (M = fluorure de transition 3d), ou encore un, ou plusieurs, des cations vitrificateurs octaédriques du tableau. Dans ce cas, les proportions relatives extrêmes des cations octaédriques et non octaédriques dépendent des combinaisons envisagées. Si la combinaison comprend $Al^{3+}$, $Mg^{2+}$ ou mélange de ces deux ions, la concentration en cations octaédriques présenter jusqu'à 3 fois la concentration en éléments vitrificateurs non octaédriques. Dans le cas général où les cations octaédriques appartiennent au groupe constitué par le gallium et les éléments de transition 3d, cette proportion est ramenée à 1,5 pour 1 au maximum. Dans le cas du scandium et du titane, ces éléments peuvent être vitrificateurs seuls, s'ils sont associés à des modifieurs en proportion adéquate.

Par ailleurs, les nouveaux éléments vitrificateurs peuvent être asociés en proportion variable avec les fluorures de zirconium ou de hafnium, dont l'aptitude à former des verres a été largement démontrée. La concentration en $ZrF_4$, $HfF_4$ ou d'un mélange des deux pouvant atteindre jusqu'à 35% de la concentration cationique totale.

Le rôle vitrificateur peut également être assuré par le fluorure de lithium seul ou associé avec une des combinaisons vitrificatrices précédentes.

Modifieurs
$Na^+$, $K^+$, $Rb^+$, $Cs^+$, $Sr^{++}$, $Ca^{++}$, $Ba^{++}$, $Eu^{++}$, $Pb^{++}$, $Tl^+$, $Bi^{3+}$
Vitrificateurs
tétraédriques: $Li^+$
octaédriques: $Li^+$, $Sc^{3+}$, $Al^{3+}$, $V^{3+}$, $Cr^3$, $Fe^{3+}$, $Ti^{4+}$
non exclusivement $Y^{3+}$, $Ln^{3+}$, $In^{3+}$, $Th^{4+}$, $U^{4+}$, $Zr^{4+}$, $Hf^{4+}$, $Nb^{4+}$
octaédriques $Ce^{4+}$, $Pb^{4+}$

A titre d'exemples, on donne dans un tableau ci-après quelques compositions qui permettent d'obtenir du verre par fusion des fluorures en ambiance neutre et refroidissement rapide du mélange fondu.

Les verres fluorés objets de la présente invention peuvent être utilisés industriellement pour leur résistance chimique, en particulier vis à vis des agents fluorants agressifs. Lorsqu'ils ne contiennent pas de cations paramagnétiques, ils présentent en outre un large domaine de transparence optique depuis l'ultraviolet jusqu'à l'infrarouge au delà de 6 micrométres. Leurs propriétés diélectriques les rendent aptes à de multiples usages dans le domaine de l'électronique.

| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 |
|---|---|---|---|---|---|---|---|---|---|---|---|---|---|---|---|---|---|---|---|---|---|---|---|---|---|---|---|
| LiF | 60 | 60 | 60 | 45 | | 30 | | | | | | | | | | | | | 10 | | | | | | | | |
| NaF | 10 | | 15 | | | 20 | | | 25 | 20 | 20 | | 5 | 5 | 5 | 25 | 15 | 15 | 17 | 5 | 5 | 20 | 25 | 20 | 5 | 5 | 5 |
| KF | | 35 | | | | | | | | | | | | | | | | | | 2 | 2 | | | | | | |
| $MgF_2$ | | | | | | | | | | 10 | 10 | | 15 | 15 | 13 | 5 | 15 | | 15 | 15 | | | | 10 | | | |
| $CaF_2$ | | | | | | | | | | | | | | | 2 | | | | 2 | 2 | | | | 10 | | | |
| $BaF_2$ | | | | 20 | | | | | | | 20 | 24 | 20 | 20 | 20 | 20 | 20 | 20 | 25 | 20 | 20 | 20 | 25 | 20 | 20 | 20 | 20 |
| $ScF_3$ | | | | | | | | | | | | | | | | | | 30 | 40 | | | | | | | | |
| $TiF_4$ | | | | | | | | | | | | | | | | | | | | | | 50 | | | | | |
| $YF_3$ | | | | | | | 20 | 30 | | 20 | | 28 | | 30 | 20 | | 20 | 8 | | 26 | 30 | | 21 | | 20 | 20 | 20 |
| $AlF_3$ | | | | | 30 | | 20 | 20 | 25 | | | 28 | 30 | 30 | 30 | | 30 | | | 28 | 28 | 30 | | | 25 | 25 | 25 |
| $LaF_3$ | | | | | 20 | | | | | | | | | | | | | | | | | | | | | | |
| $ErF_3$ | | | | | | | | | | | | | 30 | | | | | | | | | | | | | | |
| $ThF_4$ | | 5 | 25 | | | | 30 | | | | | 20 | | | | | | 15 | | | | | | | 10 | 10 | 10 |
| $UF_4$ | 30 | | | | 50 | 50 | 30 | 50 | 50 | 50 | 50 | | | | | | | | | | | | | | | | |
| $ZrF_4$ | | | 35 | | | | | | | | | | | | | | | | | | | | | | | | |
| $CeF_3$ | | | | | | | | | | | | | | | | | | | | 2 | 2 | | | | | | |
| $CeF_4$ | | | | | | | | | | | | | | | | | | | | | | | | | 20 | | |
| $PbF_4$ | | | | | | | | | | | | | | | | | | | | | | | | | | 20 | |
| $NbF_4$ | | | | | | | | | | | | | | | | | | | | | | | | | | | 20 |
| $YbF_3$ | | | | | | | | | | | | | | | 30 | | | | | 26 | | | | | | | |
| $TbF_3$ | | | | | | | | | | | | | | | | 20 | | | | | | | | | | | |
| $GaF_3$ | | | | | | | | | | | | | | | | 10 | | | | | | | | | | | |
| $SmF_3$ | | | | | | | | | | | | | | | | | 20 | | | | | | | | | | |
| $InF_3$ | | | | | | | | | | | | | | | | | | | | | | | | 30 | | | |

EP 0 036 373 B2

# EP 0 036 373 B2

**Revendications**

1. Verres fluorés dont les anions sont uniquement des anions F- caractérisés en ce que les cations vitrificateurs stabilisant la distribution homogène et apériodique des anions F- sont une ou plusieurs espèces cationiques appartenant au groupe $Li^+$, $Sc^{3+}$, $Y^{3+}$, toutes les terres rares trivalentes $In^{3+}$, $Th^{4+}$, $U^{4+}$, $Nb^{4+}$, $Ti^{4+}$, $Ce^{4+}$, $Pb^{4+}$, $Sn^{4+}$, en association avec des modifieurs appartenant au groupe $Na^+$, $K^+$, $Rb^+$, $Cs^+$, $Tl^+$, $Ca^{2+}$, $Eu^{2+}$, $Sr^{2+}$, $Ba^{2+}$, $Pb^{2+}$, $Bi^{3+}$, lesdits verres étant exempts de béryllium, d'aluminium, de métaux de transition 3d (V, Cr, Mn, Fe, Co, Ni, Cu, Zn), de gallium, de zirconium, d'hafnium et de $Tl^{3+}$.

2. Verre fluoré suivant la revendication 1, caractérisé en ce que sa composition est:
60 LiF, 30 $UF_4$, 10 NaF.

3. Verre fluoré suivant la revendication 1, caractérisé en ce que sa composition est:
30 LiF, 50 $UF_4$, 20 NaF.

4. Verre fluoré suivant la revendication 1, caractérisé en ce que sa composition est:
60 LiF, 5 $ThF_4$, 35 KF.

5. Verre fluoré suivant la revendication 1, caractérisé en ce que sa composition est:
60 LiF, 25 $ThF_4$, 15 NaF.

6. Verre fluoré suivant la revendication 1, caractérisé en ce que sa composition est:
10 LiF, 40 $ScF_3$, 8 $YF_3$, 17 NaF, 25 $BaF_2$.

7. Verres fluorés dont les anions sont uniquement des anions F- caractérisés en ce que les cations vitrificateurs stabilisant la distribution homogène et apériodique des anions F- sont une ou plusieurs espèces appartenant au groupe $Sc^{3+}$, toutes les terres rares trivalentes, l'yttrium excepté, $In^{3+}$, $Th^{4+}$, $U^{4+}$, $Nb^{4+}$, $Ti^{4+}$, $Ce^{4+}$, $Pb^{4+}$, $Sn^{4+}$ en association avec des cations octaédriques appartenant au groupe $Al^{3+}$, $Mg^{2+}$, $M_1^{2+}$, avec $M_1$ = Cr, Mn, Fe, Co, Ni, Cu, Zn, $M_2^{3+}$, avec $M_2$ = Cr, V, Fe, la concentration en $M_1$ et $M_2$ pouvant atteindre 1,5 fois la concentration desdites espèces cationiques et 3 fois ladite concentration dans le cas de l'aluminium et du magnésium, lesdits verres étant exempts de béryllium, de zirconium, d'hafnium, Ga, Li et $Tl^{3+}$.

8. Verres fluorés dont les anions sont uniquement des anions F- dans lesquels l'un des cations vitrificateurs stabilisant la distribution homogène et apériodique des anions F- est $Y^{3+}$, caractérisés en ce qu'ils contiennent encore, d'une part, un ou plusieurs cations du groupe $Li^+$, $Sc^{3+}$, les terres rares trivalentes $In^{3+}$, $Th^{4+}$, $U^{4+}$, $Nb^{4+}$, $Ce^{4+}$, $Pb^{4+}$, $Sn^{4+}$ et d'autre part, des cations octaédriques $Al^{3+}$, lesdits verres étant exempts de béryllium et de $Tl^{+++}$.

9. Verre fluoré suivant la revendication 8, caractérisé en ce que sa composition est:
20 $YF_3$, 30 $ThF_4$, 30 $UF_4$, 20 $AlF_3$.

10. Verre fluoré suivant la revendication 8, caractérisé en ce que sa composition est:
30 $YF_3$, 50 $UF_4$, 20 $AlF_3$.

11. Verre fluoré suivant la revendication 8, caractérisé en ce que sa composition est:
28 $YF_3$, 20 $ThF_4$, 28 $AlF_3$, 24 $BaF_2$.

12. Verres fluorés dont les anions sont uniquement des anions F- dans lesquels l'un des cations vitrificateurs stabilisant la distribution homogène et apériodique des anions F- est $Y^{3+}$, caractérisés en ce qu'ils contiennent encore les cations octaédriques $Al^{3+}$ et $Mg^{2+}$ en combinaison, lesdits verres étant exempts de béryllium.

13. Verres fluoré suivant la revendication 12, caractérisé en ce que sa combinaison est:
30 $YF_3$, 30 $AlF_3$, 13 $MgF_2$, 5 NaF, 2 $CaF_2$, 20 $BaF_2$.

**Patentansprüche**

1. Gläser auf Fluoridbasis, deren Anionen nur $F^-$ Anionen sind, dadurch gekennzeichnet, daß die Glasbildner-Kationen, welche die homogene und aperiodische Verteilung von $F^-$ Anionen stabilisieren, eine oder mehrere kationische Arten sind, die zu der Gruppe $Li^+$, $Sc^{3+}$, $Y^{3+}$, jeder dreiwertigen seltenen Erde $In^{3+}$, $Th^{4+}$, $U^{4+}$, $Nb^{4+}$, $Ti^{4+}$, $Ce^{4+}$, $Pb^{4+}$, $Sn^{4+}$ gehören in Verbindung mit Modifiziermitteln, die zu der Gruppe $Na^+$, $K^+$, $Rb^+$, $Cs^+$, $Tl^+$, $Ca^{2+}$, $Eu^{2+}$, $Sr^{2+}$, $Ba^{2+}$, $Pb^{2+}$, $Bi^{3+}$, gehören und daß diese Gläser frei von Beryllium, Aluminium, 3d Übergangsmetallen (V, Cr, Mn, Fe, Co, Ni, Cu, Zn), Gallium, Zirkonium, Hafnium und $Tl^{3+}$ sind.

2. Glas auf Fluoridbasis nach Anspruch 1, dadurch gekennzeichnet, daß es die Zusammensetzung
60 LiF, 30 $UF_4$, 10 NaF
hat.

3. Glas auf Fluoridbasis nach Anspruch 1, dadurch gekennzeichnet, daß es die Zusammensetzung
30 LiF, 50 $UF_4$, 20 NaF
hat.

4. Glas auf Fluoridbasis nach Anspruch 1, dadurch gekennzeichnet, daß es die Zusammensetzung
60 LiF, 5$ThF_4$, 35 KF
hat.

5. Glas auf Fluoridbasis nach Anspruch 1, dadurch gekennzeichnet, daß es die Zusammensetzung
60 LiF, 25 $ThF_4$, 15 NaF
hat.

8

6. Glas auf Fluoridbasis nach Anspruch 1, dadurch gekennzeichnet, daß es die Zusammensetzung

$$10\ LiF,\ 40\ ScF_3,\ 8\ YF_3,\ 17\ NaF,\ 25\ BaF_2$$

hat.

7. Gläser auf Fluoridbasis, deren Anionen nur $F^-$ Anionen sind, dadurch gekennzeichnet, daß die Glasbildner-Kationen, die die homogene und aperiodische Verteilung der $F^-$ Anionen stabilisieren, eine oder mehrere Arten aus der Gruppe $Sc^{3+}$, allen dreiwertigen seltenen Erden, zusgenommen Yttrium, $In^{3+}$, $Th^{4+}$, $U^{4+}$, $Nb^{4+}$, $Ti^{4+}$, $Ce^{4+}$, $Pb^{4+}$, $Sn^{4+}$ sind, in Verbindung mit oktaedrischen Kationen aus der Gruppe $Al^{3+}$, $Mg^{2+}$, $M_1^{2+}$, mit $M_1$ = Cr, Mn, Fe, Co, Ni, Cu, Zn, $M_2^{3+}$, mit $M_2$ = Cr, V, Fe, wobei die Konzentration von $M_1$ und $M_2$ das 1,5-fache der Konzentration der kationischen Arten und das dreifache der Konzentration im Fall von Aluminium und Magnesium erreichen kann, und daß diese Gläser frei von Beryllium, Zirkonium, Hafnium, Ga, Li und $Tl^{3+}$ sind.

8. Gläser auf Fluoridbasis, deren Anionen nur $F^-$ Anionen sind, wobei eines der Glasbildner-Kationen, das die homogene und aperiodische Verteilung von $F^-$ Anionen stabilisiert $Y^{3+}$ ist, dadurch gekennzeichnet, daß sie einerseits noch eines oder mehrere Kationen aus der Gruppe $Li^+$, $Sc^+$, dreiwertigen seltenen Erden, $In^{3+}$, $Th^{4+}$, $U^{4+}$, $Nb^{4+}$, $Ti^{4+}$, $Ce^{4+}$, $Pb^{4+}$, $Sn^{4+}$ enthalten und andererseits oktaedrische Kationen $Al^{3+}$, und daß diese Gläser frei von Beryllium und $Tl^{+++}$ sind.

9. Glas auf Fluoridbasis nach Anspruch 8, dadurch gekennzeichnet, daß es die Zusammensetzung

$$20\ YF_3,\ 30\ ThF_4,\ 30\ UF_4,\ 20\ AlF_3$$

hat.

10. Glas auf Fluoridbasis nach Anspruch 8, dadurch gekennzeichnet, daß es die Zusammensetzung

$$30\ YF_3,\ 50\ UF_4,\ 20\,AlF_3$$

hat.

11. Glas auf Fluoridbasis nach Anspruch 8, dadurch gekennzeichnet, daß es die Zusammensetzung

$$28\ YF_3,\ 20\ ThF_4,\ 28\ AlF_3,\ 24\ BaF_2$$

hat.

12. Gläser auf Fluoridbasis, deren Anionen nur $F^-$ Anionen sind, wobei eines der Glasbildner-Kationen, das die homogene und aperiodische Verteilung der $F^-$ Anionen stabilisiert $Y^{3+}$ ist, dadurch gekennzeichnet, daß sie noch kombinierte oktaedrische Kationen $Al^{3+}$ und $Mg^{2+}$ enthalten, und daß diese Gläser frei von Beryllium sind.

13. Glas auf Fluoridbasis nach Anspruch 12, dadurch gekennzeichnet, daß es die Zusammensetzung

$$30\ YF_3,\ 30\ AlF_3,\ 13\ MgF_2,\ 5\ NaF,\ 2\ CaF_2,\ 20\ BaF_2$$

hat.

## Claims

1. Fluoride glasses whose anions are anions $F^-$ only characterized in that the vitrifier cations stabilizing the homogeneous and aperiodic distribution of anions $F^-$ are one or several cationic species belonging to the group $Li^+$, $Sc^{3+}$, $Y^{3+}$, every trivalent rare earth, $In^{3+}$, $Th^{4+}$, $U^{4+}$, $Nb^{4+}$, $Ti^{4+}$, $Ce^{4+}$, $Pb^{4+}$, $Sn^{4+}$, associated to modifiers belonging to the group $Na^+$, $K^+$, $Rb^+$, $Cs^+$, $Tl^+$, $Ca^{2+}$, $Eu^{2+}$, $Sr^{2+}$, $Ba^{2+}$, $Pb^{2+}$, $Bi^{3+}$, said glasses being free of beryllium, aluminum, 3d transition metals (V, Cr, Mn, Fe, Co, Ni, Cu, Zn), gallium, zirconium, hafnium and $Tl^{3+}$.

2. A fluoride glass according to claim 1, characterized in that its composition is:

$$60\ LiF,\ 30\ UF_4,\ 10\ NaF.$$

3. A fluoride glass according to claim 1, characterized in that its composition is:

$$30\ LiF,\ 50\ UF_4,\ 20\ NaF.$$

4. A fluoride glass according to claim 1, characterized in that its composition is:

$$60\ LiF,\ 5\ ThF_4,\ 35\ KF.$$

5. A fluoride glass according to claim 1, characterized in that its composition is:

$$60\ LiF,\ 25\ ThF_4,\ 15\ NaF.$$

6. A fluoride glass according to claim 1, characterized in that its composition is:

$$10\ LiF,\ 40\ ScF_3,\ 8\ YF_3,\ 17\ NaF,\ 25\ BaF_2.$$

7. Fluoride glasses whose anions $F^-$ only characterized in that the vitrifier cations stabilizing the homogeneous and aperiodic distribution of anions $F^-$ are one or several species belonging to the group $Sc^{3+}$, every trivalent rare earth, save yttrium, $In^{3+}$, $Th^{4+}$, $U^{4+}$, $Nb^{4+}$, $Ti^{4+}$, $Ce^{4+}$, $Pb^{4+}$, $Sn^{4+}$, associated with octahedral cations belonging to the group $Al^{3+}$, $Mg^{2+}$, $M_1^{2+}$, with $M_1$ = Cr, Mn, Fe, Co, Ni, Cu, Zn, $M_2^{3+}$, with $M_2$ = Cr, V, Fe, the concentration of $M_1$ and $M_2$ possibly reaching 1.5 times the concentration of said cationic species and 3 times said concentration in case of aluminum and magnesium, said glasses being free of beryllium, zirconium, hafnium, Ga, Li and $T_1^{3+}$.

8. Fluoride glasses whose anions are anions $F^-$ only wherein one of the vitrifier cations stabilizing the homogeneous and aperiodic distribution of anions $F^-$ is $Y^{3+}$, characterized in that they still contain, on the one hand, one or several cations of the group $Li^+$, $Sc^+$ trivalent rare earths, $In^{3+}$, $Th^{4+}$, $U^{4+}$, $Nb^{4+}$, $Ti^{4+}$, $Ce^{4+}$, $Pb^{4+}$, $Sn^{4+}$, and, on the other hand, octahedral cations $Al^{3+}$, said glases being free of beryllium and $Tl^{+++}$.

9. A fluoride glass according to claim 8, characterized in that its composition is:

$$20\ YF_3,\ 30\ ThF_4,\ 30\ UF_4,\ 20\ AlF_3.$$

10. A fluoride glass according to claim 8, characterized in that its composition is:
   30 $YF_3$, 50 $UF_4$, 20 $AlF_3$.

11. A fluoride glass according to claim 8, characterized in that its composition is:
   28 $YF_3$, 20 $ThF_4$, 28 $AlF_3$, 24 $BaF_2$.

12. Fluoride glasses whose anions are anions $F^-$ only wherein one of the vitrifier cations stabilizing the homogeneous and aperiodic distribution of anions $F^-$ is $Y^{3+}$, characterized in that they still contain combined octahedral cations $Al^{3+}$ and $Mg^{2+}$, said glasses being free of beryllium.

13. A fluoride glass according to claim 12, characterized in that its composition is:
   30 $YF_3$, 30 $AlF_3$, 13 $MgF_2$, 5 NaF, 2 $CaF_2$, 20 $BaF_2$.